# EUROPÄISCHE PATENTSCHRIFT

(11) **EP 2 985 198 B1**
(45) Veröffentlichungstag und Bekanntmachung des Hinweises auf die Patenterteilung: **04.04.2018**
(21) Anmeldenummer: 15169480.9
(22) Anmeldetag: 27.05.2015
(51) Int. Cl.: B60T 8/40

(54) **HYDRAULISCHE BREMSANLAGE MIT ANTIBLOCKIER-FUNKTION**
HYDRAULIC BRAKE SYSTEM WITH ANTI- LOCKING FUNCTION
INSTALLATION DE FREINAGE HYDRAULIQUE AYANT UNE FONCTION ANTIBLOCAGE

(30) Priorität: 28.05.2014 DE 102014007717
(43) Veröffentlichungstag der Anmeldung: 17.02.2016
(73) Patentinhaber: Brake Force One GmbH, 72074 Tübingen (DE)
(72) Erfinder: Lauhoff, Jakob, 72070 Tübingen (DE)
(74) Vertreter: Kohler Schmid Möbus Patentanwälte

(56) Entgegenhaltungen:
- FR-A1- 2 931 769
- US-A- 5 029 950

## Beschreibung

Die Erfindung betrifft eine hydraulische Bremsanlage mit Antiblockier-Funktion gemäß der im Oberbegriff des Patentanspruchs 1 angegebenen Art.

Ein Bremssystem, das eine Stabilitäts- und Bahnkontrolle ermöglicht, ist aus der FR 2 931 769 A1 bekannt.

Ein Antiblockiersystem und eine Antischlupfregelung sind aus der US 5,029,950 A bekannt.

Eine hydraulische Bremsanlage mit Antiblockier-Funktion für ein Fahrrad ist in der DE 101 58 382 A1 offenbart. Nach der Lehre der DE 101 58 382 ist vorgesehen, dass das Öffnen des Volumenspeichers über ein Federelement gesteuert ist und der Volumenspeicher gegen die Federkraft des Federelements öffnet. Für das Öffnen des Volumenspeichers gegen die Federkraft des Federelements ist somit ein hydraulischer Grenzdruck erforderlich, bei dem die Federkraft kleiner als die durch den hydraulischen Grenzdruck hervorgerufene Druckkraft ist. Da z. B. bei nassen oder glatten Straßenverhältnissen der unter Umständen zum Blockieren der Räder führende Bremsdruck in der hydraulischen Bremsanlage kleiner als der erforderliche Grenzdruck ist, kann es somit vorkommen, dass die Antiblockier-Funktion nicht zur Verfügung steht.

Der Erfindung liegt die Aufgabe zugrunde, eine hydraulische Bremsanlage mit Antiblockier-Funktion gemäß der im Oberbegriff des Patentanspruchs 1 angegebenen Art derart weiterzubilden, dass die Antiblockier-Funktion unabhängig vom in der hydraulischen Bremsanlage herrschenden Bremsdruck zur Verfügung gestellt ist.

Diese Aufgabe wird durch die kennzeichnenden Merkmale des Patentanspruchs 1 in Verbindung mit seinen Oberbegriffsmerkmalen gelöst.

Die Unteransprüche bilden vorteilhafte Weiterbildungen der Erfindung.

In bekannter Art und Weise umfasst die hydraulische Bremsanlage mit Antiblockier-Funktion einen hydraulischen Druck erzeugenden Geberzylinder, der über eine hydraulische Leitung mit einer Radbremse hydraulisch kommunizierend verbunden ist, sowie ein steuerbares Trennventil, das bei aktivierter Antiblockier-Funktion den Geberzylinder von der Radbremse hydraulisch trennt.

Weiterhin umfasst die hydraulische Bremsanlage einen gegen eine Federkraft eines Federelements zu öffnenden Volumenspeicher, der bei aktivierter Antiblockier-Funktion das Volumen in der hydraulischen Leitung vergrößert und damit den für das Lösen der Radbremse erforderlichen Druckverlust bewirkt. Weiterhin umfasst die hydraulische Bremsanlage in bekannter Art und Weise einen Drehzahlsensor, der ein Blockieren des Rads detektiert sowie ein Steuergerät zur Steuerung der hydraulischen Bremsanlage.

Erfindungsgemäß steht das Federelement mit einem über das Steuergerät ansteuerbaren elektrischen Antrieb in Wirkverbindung, der eine Rückstellung des Federelements und damit das Öffnen des Volumenspeichers bewirkt. Die erfindungsgemäße Ausgestaltung der hydraulischen Bremsanlage hat den Vorteil, dass nach entsprechender Ansteuerung des elektrischen Antriebs durch das Steuergerät der Volumenspeicher geöffnet wird, d. h. dass das Öffnen des Volumenspeichers unabhängig von dem in der hydraulischen Bremsanlage herrschenden Bremsdruck erfolgt, sodass die Antiblockier-Funktion jederzeit zur Verfügung gestellt ist.

Die erfindungsgemäße hydraulische Bremsanlage mit Antiblockier-Funktion ist insbesondere für ein Elektrofahrrad vorgesehen. Selbstverständlich ist ein Einsatz auch in anderen Fahrzeugen, z. B. Motorrad, Mofa oder Kraftfahrzeug, denkbar.

Lediglich der Vollständigkeit halber wird noch darauf hingewiesen, dass für die Regelung der Antiblockier-Funktion noch weitere, mit dem Steuergerät in Wirkverbindung stehende Sensoren vorgesehen sein können, sodass z. B. auch Drücke, Beschleunigen und/oder Hebelbewegungen bei der Regelung mit berücksichtigt werden können.

Vorzugsweise ist dabei der elektrische Motor als ein Linearmotor ausgebildet, über den das Federelement des Volumenspeichers aktiv geöffnet und geschlossen wird. Da Linearmotoren sich durch eine hohe Beschleunigung und Verfahrgeschwindigkeit auszeichnen, erweist sich die Ausbildung des elektrischen Antriebs als Linearmotor als besonders vorteilhaft, da ein schnelles Ansprechen der gewünschten Antiblockier-Funktion sichergestellt ist.

Eine bevorzugte Ausführungsform des Linearmotors sieht vor, dass der Läuferstab des Linearmotors als ein Hohlkörper ausgebildet ist, in den ein erster hydraulischer Leitungsabschnitt und ein hiervon getrennter zweiter hydraulischer leitungsabschnitt hineinreichend angeordnet sind. Hierbei ist in axialer Richtung betrachtet der erste hydraulische Leitungsabschnitt fest im Läuferstab und der zweite hydraulische Leitungsabschnitt beweglich im Läuferstab gelagert, sodass eine Verfahrbewegung des Läuferstabs in axialer Richtung gegen das Federelement eine Bewegung des ersten hydraulischen Leitungsabschnitts relativ zum zweiten hydraulischen Leitungsabschnitt bewirkt, die das Volumen in der hydraulischen Leitung vergrößert. Die erfindungsgemäße Ausgestaltung hat den Effekt, dass der Linearmotor ein Teil des mit Hydraulikflüssigkeit durchflossenen hydraulischen Leitungssystems ist, d. h. dass eine wenig Bauraum beanspruchende Anordnung des Linearmotors in der hydraulischen Leitung sichergestellt ist.

Gemäß einer besonders vorteilhaften Ausführungsform der Erfindung sind der Linearmotor, das Trennventil und das Federelement in einem Gehäuse vormontiert, aus dem die beiden hydraulischen Leitungsabschnitte hinausreichen. Hierbei ist der erste hydraulische Leitungsabschnitt in axialer Richtung bewegbar im Gehäuse gelagert und der zweite hydraulische Leitungsabschnitt ist fest mit dem Gehäuse verbunden. Der Vorteil dieser Ausgestaltung ist, dass nunmehr eine kompakte ABS-Einheit zur Verfügung gestellt ist, die leicht zu montieren, insbesondere auch nachrüstbar ist.

Vorzugsweise ist dabei im Gehäuse eine ferromagnetische Halteplatte derart angeordnet, dass diese in magnetischer Wechselwirkung mit zumindest einem Ringmagneten des Linearmotors steht, aus der eine in Richtung der Federkraft gerichtete Magnetkraft resultiert. Nähert sich der Druck in der hydraulischen Leitung dem Grenzdruck, d. h. die bei dem Grenzdruck vorliegende hydraulische Kraft ist größer als die Summe aus Magnet- und Federkraft, dann greift der Linearmotor unterstützend ein. Der Vorteil dieser Ausführungsform ist, dass der Linearmotor schwächer dimensioniert sein kann, da er beim Verfahren weniger Kraft gegen die Feder leisten muss.

Denkbar ist auch eine Abstimmung, bei der die Kombination aus Federkraft und Magnetkraft nur in ca. 90 % der Situationen stark genug sind, um entgegenzuhalten. Wird der Grenzwert überschritten, greift der Linearmotor ein und unterstützt die Feder und stellt dadurch sicher, dass die Bremse weiterhin voll funktionstüchtig ist.

Eine andere Ausführungsform sieht vor, dass das Federelement derart dimensioniert ist, dass die Federkraft des Federelements größer als eine durch die Gebereinheit erzeugbare hydraulische Kraft ist.

Vorzugsweise ist das Trennventil über den elektrischen Antrieb mechanisch angesteuert.

Eine andere Ausführungsform sieht vor, dass das Federelement derart dimensioniert ist, dass die Federkraft des Federelements größer als eine durch die Gebereinheit erzeugbare hydraulische Kraft ist.

Vorzugsweise ist das Trennventil über den elektrischen Antrieb mechanisch angesteuert.

Eine andere Ausführungsform sieht vor, dass das Trennventil über das Steuergerät elektrisch angesteuert ist.

Die Radbremse kann ein Gehäuse aufweisen, in dem ein erster Zylinderraum ausgebildet ist, in dem ein Stufenkolben angeordnet ist, wobei ein weiterer Zylinderraum vorgesehen ist, in dem ein Bremskolben angeordnet ist. Die Zylinderräume können in axialer Richtung des ersten Zylinderraums gesehen hintereinander angeordnet sein. Anders als im Stand der Technik sind somit der Bremskraftverstärker (Stufenkolben) und der Nehmerkolben (Bremskolben) nicht mehr in separaten Bohrungen parallel zueinander positioniert, sondern in axialer Richtung hintereinander angeordnet. Dadurch ist es möglich, das Gehäuse in einer Schmiedeform herzustellen. Das Gehäuse muss nicht gefräst werden. Dadurch werden die Herstellungskosten erheblich gesenkt. Eine hydraulische Bremsanlage mit einer ABS-Funktion und einer Radbremse mit einem Gehäuse, welches Stufenkolben und Bremskolben in axialer Richtung hintereinander aufweist, wird auch als eigenständige Erfindung betrachtet.

Der Stufenkolben kann aus ferromagnetischem Material ausgebildet sein und in dem Gehäuse kann ein Magnet angeordnet sein, der mit dem Stufenkolben zusammenwirkt. Insbesondere kann durch den Magneten ein Rückstellelement des Stufenkolbens unterstützt werden. Die resultierende Kennlinie des vom Magneten unterstützen Rückstellelements verbessert den Wirkungsgrad der Radbremse erheblich.

Der Stufenkolben kann zwei Abschnitte unterschiedlicher Querschnittsfläche aufweisen, wobei zwischen einer Gehäusewand und einem Stufenkolbenabschnitt größerer Querschnittsfläche ein Füllvolumen, zwischen dem Bremskolben und einem Stufenkolbenabschnitt kleinerer Querschnittsfläche ein Arbeitsvolumen und zwischen einem Gehäuseabschnitt und dem Stufenkolbenabschnitt größerer Querschnittsfläche ein Ringraum ausgebildet ist, in dem ein Rückstellelement angeordnet ist.

Die Verwendung eines Stufenkolbens hat den Vorteil, dass ein Bremskraftverstärker in dem Gehäuse, d. h. einer Bremszange realisiert wird.

Grundsätzlich ist es denkbar, das Rückstellelement, welches als Federelement, insbesondere Schraubenfeder, ausgebildet sein kann, auch im Arbeitsraum vorzusehen. Dies hätte jedoch den Nachteil, dass das Rückstellelement mit einem geringeren Durchmesser ausgebildet werden müsste. Außerdem würde das Rückstellelement an dieser Position die Baugröße der Bremszange vergrößern. Der Ringraum ist für die Funktion der Bremszange ohnehin notwendig. Er wird erfindungsgemäß auch für die Anordnung des Rückstellelements genutzt. Dadurch wird keine zusätzliche Baulänge verursacht. Die Anordnung des Rückstellelements im Bauraum bewirkt weiterhin, dass der vom Stufenkolben zurückgelegte Weg durch das Rückstellelement begrenzt wird. Außerdem kann an dieser Stelle eine relativ weiche Feder bei kleiner axialer Länge als Rückstellelement vorgesehen werden, die die gleiche Steifigkeit aufweist wie eine Feder, die im Arbeitsraum alternativ mit deutlich größeren Dimensionen angeordnet werden müsste.

Erfindungsgemäß kann weiterhin vorgesehen sein, dass der Ringraum ohne Atmosphärenanschluss ausgebildet ist. Wird eine Bremsung ausgeführt, wird demnach die Luft, die im Ringraum vorhanden ist, komprimiert. Dadurch kann die Bremskraft begrenzt werden. Außerdem kann das Rückstellelement im Ringraum dadurch schwächer dimensioniert werden. Wenn kein Atmosphärenanschluss vorhanden ist, kann auch sichergestellt werden, dass kein Schmutz in den Zylinderraum gelangt. Die komprimierte Luft kann auch weiterhin das Rückstellelement unterstützen, um den Stufenkolben in seine Ausgangsstellung zurückzubewegen, wenn keine Bremsung benötigt wird. Auch die Ausfallsicherheit der Bremse wird durch den fehlenden Atmosphärenanschluss erhöht. Tritt eine Undichtigkeit am Stufenkolben auf, so gelangt die Hydraulikflüssigkeit lediglich in den Ringraum. Sie kann die Bremszange jedoch nach wie vor nicht verlassen. Wäre ein Atmosphärenanschluss vorhanden, so würde die Bremsflüssigkeit entweichen mit der Folge, dass keine Bremsung mehr durchgeführt werden könnte.

Durch die Kombination eines Stufenkolbens mit einem Bremskolben wird eine Art Bremskraftverstärker realisiert. Durch die Anordnung des zumindest einen Bremskolbens im Gehäuse der Bremszange kann eine besonders stabile und Platz sparende Ausgestaltung der Bremszange erreicht werden.

Vorzugsweise sind zwei Bremskolben vorgesehen, sodass zwei bewegbare Bremsbacken vorgesehen werden können, die durch die Bremskolben bewegt werden können.

Zur Ankopplung einer Hydraulikleitung an die Bremszange kann ein Ankoppelelement vorgesehen sein, welches in das Gehäuse integriert sein kann und an dem Gehäuse drehbar angeordnet ist. Dadurch wird eine drehbare Verbindung zwischen Gehäuse und Hydraulikleitung ermöglicht. Eine Integration des Ankoppelelements in die Bremszange wirkt Beschädigungen durch Stürze des Fahrrads entgegen. Das Ankoppelelement kann dabei ein Anschlussstück und eine Anschlussverschraubung umfassen.

Weitere Vorteile ergeben sich, wenn im Stufenkolben ein Ventil angeordnet ist. Dabei kann das Ventil zunächst geöffnet sein. Wenn demnach über eine Betätigungsvorrichtung Hydraulikflüssigkeit zur Bremszange gefördert wird, durchströmt die Hydraulikflüssigkeit zunächst das Arbeitsvolumen, das Ventil und das Füllvolumen und gelangt in den oder die Zylinderräume, in denen der oder die Bremskolben angeordnet sind. Dies entspricht einer so genannten Füllphase. Wenn nun sämtliche Räume in der Bremszange mit Hydraulikflüssigkeit gefüllt sind und die Bremsbeläge, die durch die Bremskolben beaufschlagt sind, an der Bremsscheibe anliegen, steht an beiden Seiten des Stufenkolbens (im Füllvolumen und Arbeitsvolumen) der gleiche Druck an. Da die Stufenkolbenabschnitte jedoch unterschiedliche Querschnittsflächen aufweisen, bewirkt dies, dass der Stufenkolben im Zylinderraum verlagert wird. Bei der Verlagerung des Stufenkolbens wird das Ventil geschlossen, sodass bei einer weiteren Druckbeaufschlagung mittels der Betätigungsvorrichtung der Stufenkolben verlagert wird und die Hydraulikflüssigkeit im Arbeitsvolumen des Zylinderraums wirksam wird. Dies bedeutet, dass bei einer weiteren Betätigung der Betätigungsvorrichtung die Bremskolben weiter in Richtung Bremsscheibe bewegt werden und somit eine Bremsung erfolgt.

Dabei kann das Ventil einen Stößel aufweisen, der sich an dem Ankoppelelement, insbesondere dessen Anschlussverschraubung, abstützt. Dadurch ergibt sich eine sehr kompakte Baulänge der Bremszange. Es muss kein zusätzliches Abstützelement für den Ventilstößel vorgesehen werden, da dieser sich an dem Ankoppelelement selbst abstützen kann. Dadurch kann die Anzahl der Bauteile reduziert werden.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet.

In der Zeichnung bedeutet:
- Fig. 1: eine schematische Darstellung einer hydraulischen Bremsanlage mit Antiblockier-Funktion für ein Elektrofahrrad;
- Fig. 2: eine ABS-Einheit, in die die für die Antiblockier-Funktion notwendigen Bauteile integriert sind;
- Fig. 3: die ABS-Einheit aus Fig. 2 in aktiviertem Antiblockier-Modus;
- Fig. 4: eine Schnittdarstellung einer Radbremse.

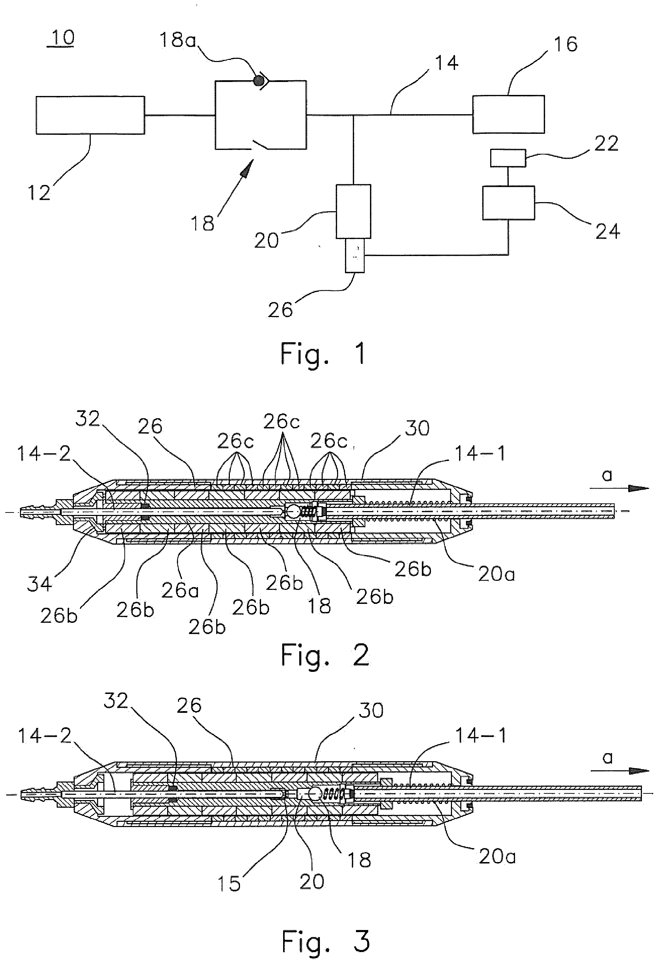

Fig. 1 zeigt eine insgesamt mit dem Bezugszeichen 10 bezeichnete Bremsanlage mit Antiblockier-Funktion für ein Elektrofahrrad.

Die hydraulische Bremsanlage 10 umfasst einen, z. B. über einen Bremshebel, betätigbaren Geberzylinder 12, der über eine hydraulische Leitung 14 hydraulisch kommunizierend mit einer Radbremse 16 verbunden ist. Über den Geberzylinder 12 ist in bekannter Art und Weise der für das Ansprechen der Radbremse 16 notwendige hydraulische Druck erzeugbar.

Wie Fig. 1 weiter zeigt, sind stromabwärts vom Geberzylinder 12 zwei Ventile angeordnet, nämlich ein steuerbares Trennventil 18 und parallel dazu ein Rückschlagventil 18a. Weiterhin weist die hydraulische Bremsanlage 10 einen gegen eine Federkraft eines Federelements zu öffnenden Volumenspeicher 20, einen Drehzahlsensor 22 sowie ein Steuergerät 24 auf.

In der schematischen Darstellung gemäß Fig. 1 wurde auf eine Darstellung des Federelements des Volumenspeichers 20 verzichtet. Das Federelement ist vorliegend so dimensioniert, dass die resultierende Federkraft größer als eine durch den Geberzylinder 12 erzeugbare hydraulische Kraft ist.

Wie Fig. 1 weiter zu entnehmen ist, weist die hydraulische Bremsanlage 10 zudem einen über das Steuergerät 24 ansteuerbaren elektrischen Antrieb 26 auf, der wiederum mit dem Federelement des Volumenspeichers in Wirkverbindung steht. Der elektrische Antrieb 26, das Steuergerät 24 und der Drehzahlsensor 22 sind über entsprechende Kommunikationsleitungen miteinander verbunden. Der elektrische Antrieb 26 steht dabei derart mit dem Federelement des Volumenspeichers 20 in Wirkverbindung, dass eine aktive Rückstellung des Federelements und damit das Öffnen des Volumenspeichers bewirkbar ist.

Nachfolgend zur Funktionsweise der hydraulischen Bremsanlage 10:
Sobald das Steuergerät 24 mittels des Drehzahlsensors 22 das Blockieren der Räder erkennt, wird der elektrische Antrieb 26 angesteuert, der daraufhin den Volumenspeicher 20 gegen die Federkraft des Federelements öffnet; zeitgleich wird mechanisch oder elektrisch das Trennventil 18 geschlossen.

Somit ist der Geberzylinder 12 von der Radbremse 16 hydraulisch getrennt, d. h. ein Fahrer kann den Druck im Bremssattel nicht weiter erhöhen, da der Griff quasi abgeklemmt ist.

Durch das Öffnen des Volumenspeichers 20 ist das Volumen in der hydraulischen Leitung 14 vergrößert, sodass der hydraulische Druck in der Bremsanlage 10 sinkt.

Mittels des elektrischen Antriebs 26 kann somit der Druck so lange geregelt werden, bis die Fahrstabilität auch ohne Antiblockier-Funktion sichergestellt ist. Anschließend wird der Volumenspeicher 20 geschlossen und das Ventil 18 wird wieder geöffnet, sodass die Bremsanlage 10 wieder ganz normal arbeitet.

Fig. 2 und Fig. 3 zeigen eine kompakt bauende ABS-Einheit 100, in der die für die Antiblockier-Funktion notwendigen Bauteile vormontiert sind.

Gemäß Fig. 2 und Fig. 3 sind die Bauteile Trennventil 18, Volumenspeicher 20 mit zugehörigem Federelement 20a sowie der elektrische Antrieb 26 in einem Gehäuse 30 integriert.

Der elektrische Antrieb 26 ist dabei als ein Linearmotor ausgebildet und umfasst in bekannter Art und Weise einen Läuferstab 26a, mehrere am Läuferstab 26a fest angeordnetem den Läuferstab 26a umfassende Ringmagnete 26b sowie mehrere radial beabstandet zu den Ringmagneten 26b im Gehäuse 30 fest angeordnete Spulen 26c.

Wie Fig. 2 weiter zu entnehmen ist, ist dabei der Läuferstab 26a des Linearmotors 26 als Hohlkörper ausgebildet, in dem ein erster hydraulischer Leitungsabschnitt 14-1 und ein zweiter hydraulischer Leitungsabschnitt 14-2 angeordnet sind. Zwischen den beiden Leitungsabschnitten 14-1 und 14-2 ist im Läuferstab 26a ein Hohlraum ausgebildet, in dem das Trennventil 18, hier in Form eines federbelasteten Kugelventils, angeordnet ist.

Während der erste hydraulische Leitungsabschnitt 14-1 fest mit dem Läuferstab 26a verbunden und axial beweglich im Gehäuse 30 gelagert ist, ist der zweite hydraulische Leitungsabschnitt 14-2 axial beweglich im Läuferstab 26a gelagert und fest mit dem Gehäuse 30 verbunden.

Im eingebauten Zustand ist der erste hydraulische Leitungsabschnitt 14-1 dem Geberzylinder 12 und der zweite hydraulische Leitungsabschnitt 14-2 der Radbremse 16 zugewandt.

Fig. 2 zeigt den Zustand bei einem "normalen" Bremsvorgang, d. h. die Antiblockier-Funktion ist nicht aktiv.

Bei Betätigung des Geberzylinders 12 fließt Hydraulikflüssigkeit durch den ersten hydraulischen Leitungsabschnitt 14-1 und von dort zum als Kugelventil ausgebildeten Trennventil 18. Wie Fig. 2 zu entnehmen ist, weist der zweite hydraulische Leitungsabschnitt 14-2 an seinem dem Kugelventil zugewandten Endbereich Bohrungen 15 auf, sodass Hydraulikflüssigkeit an der Kugel des Kugelventils 18 vorbeifließen und durch die Bohrungen 15 in den zweiten Leitungsabschnitt 14-2 gelangen kann, sodass der erforderliche Druckaufbau durch den zweiten Leitungsabschnitt 14-2 zur Radbremse 16 gewährleistet ist.

Fig. 3 zeigt nun die Situation bei aktivierter Antiblockier-Funktion:
Nach entsprechender Ansteuerung des Linearmotors 26 durch das Steuergerät 24 bewegt sich der Läuferstab 26a gegen die Federkraft des Federelements 20a relativ zu den Spulen des Linearmotors 26c nach rechts. Die Folge davon ist, dass der erste hydraulische Leitungsabschnitt 14-1 mitbewegt und teilweise aus dem Gehäuse 30 herausgeschoben wird.

Da der zweite hydraulische Leitungsabschnitt 14-2 fest im Gehäuse 30 gelagert ist und im Läuferstab 26a axial beweglich gelagert ist, bewirkt die Relativbewegung der beiden Leitungsabschnitte 14-1, 14-2 eine Volumenvergrößerung innerhalb des hydraulischen Leitungssystems. Gleichzeitig schließt die Kugel des Kugelventils 18 den Durchfluss durch den Läuferstab 26a ab, sodass der Geberzylinder 12 von der Radbremse 16 hydraulisch getrennt ist.

Aufgrund des nunmehr vorhandenen größeren Volumens in der hydraulischen Leitung 14 fällt der Druck in der Radbremse 16, sodass einem Blockieren der Räder entgegengewirkt wird.

Um ein Herausfließen von Hydraulikfluid aus dem Läuferstab 26 zu verhindern, ist bei der axialbeweglichen Lagerung des zweiten hydraulischen Leitungsabschnitts 14-2 im Läuferstab 26a eine dynamische Dichtung 32 vorgesehen.

Weiterhin ist im Gehäuse 30 eine ferromagnetische Halteplatte 34 angeordnet. Die zwischen der ferromagnetischen Halteplatte 34 und dem Ringmagneten 26b des Linearmotors 26 auftretende Magnetkraft wirkt als zusätzliche Haltekraft, die die Federkraft des Federelements 20a unterstützt. Somit kann das Federelement 20a vorliegend schwächer dimensioniert werden, mit der Folge, dass auch der Linearmotor 26 schwächer dimensioniert werden kann, da dieser bei seiner Verfahrbewegung gegen die Federkraft des Federelements 20a weniger Arbeit verrichten muss.

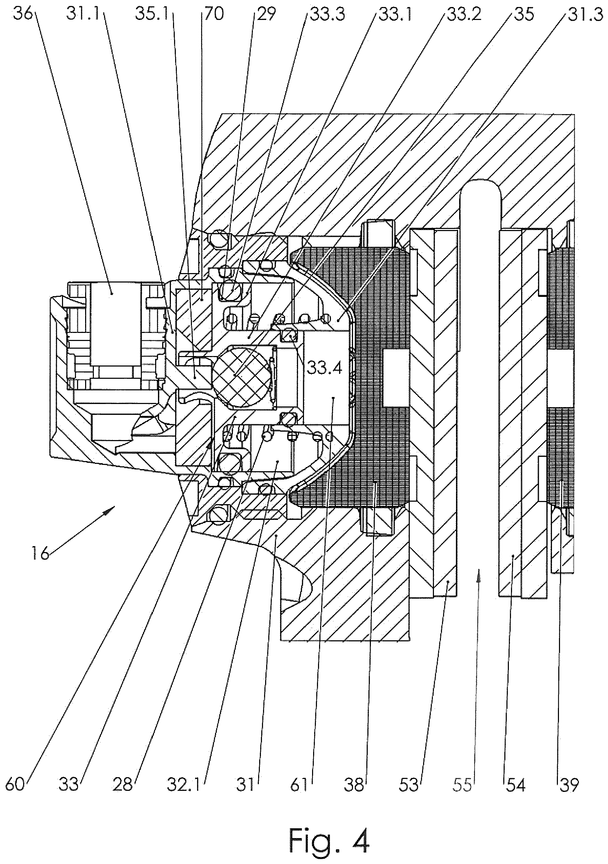

Die Fig. 4 zeigt eine Radbremse 16 in einer Schnittdarstellung. Die Radbremse 16 weist ein Gehäuse 31 mit einem Zylinderraum 29 auf. In dem Zylinderraum 29 ist ein Stufenkolben 33 angeordnet, der einen Abschnitt 33.1 mit größerem Querschnitt und einen Abschnitt 33.2 mit kleinerem Querschnitt aufweist. Zwischen dem Abschnitt 33.1 und der Gehäusewand 31.1 ist ein Füllvolumen 60 und zwischen dem Abschnitt 33.2 und einem Bremskolben 38 ist ein Arbeitsvolumen 61 ausgebildet. Der Zwischenraum zwischen dem Abschnitt 33.1 und dem Gehäuseabschnitt 31.3 bildet einen Ringraum 32.1. Der Stufenkolben 33 stützt sich über ein Rückstellelement 28 an dem Gehäuseabschnitt 31.3 ab.

Beidseits des Stufenkolbens 33 sind Kolbendichtringe 33.3, 33.4 vorgesehen. Hydraulikflüssigkeit wird durch ein Anschlussstück 36 zum Anschluss einer Hydraulikleitung zugeführt, welches über eine Anschlussverschraubung am Gehäuse 31 gehalten und in dieses integriert ist, jedoch relativ zum Gehäuse 31 um die Achse des Zylinderraums 29 schwenkbar ist. Das Anschlussstück 36 und die Anschlussverschraubung sind Teile eines Ankoppelelements.

Das Vorsehen eines Stufenkolbens hat den Vorteil, dass dadurch einfach ein Bremskraftverstärker realisiert wird. Der Bremskraftverstärker wird dabei innerhalb des Gehäuses realisiert. Dies spart Gewicht, Kosten und ermöglicht die Kombination von einem schlanken Design bei einer erhöhten Bremskraft. Außerdem entsteht der hohe Druck für die Bremsung erst im Gehäuse, was die Verwendung von preisgünstigen, weniger druckbeständigen Hydraulikleitungen ermöglicht.

Innerhalb des Stufenkolbens 33 ist ein Ventil 35 angeordnet. Bei Einleitung einer Bremsung ist das Ventil 35 zunächst geöffnet und ermöglicht ein freies Durchströmen von Hydraulikflüssigkeit bis zur Anlage der Bremsbeläge 53, 54 an der Bremsschreibe 55. Das Ventil 35 ist durch Anlage des Ventilstößels 35.1 an der Anschlussverschraubung bei nach links verlagertem Stufenkolben 33 geöffnet. Die Anschlussverschraubung weist eine Anlage für den Ventilstößel 35.1 auf.
Sobald die Beläge 53, 54 an der Bremsschreibe 55 anliegen, baut sich ein hydraulischer Druck auf, der auf beiden Seiten des Stufenkolbens 33 gleich groß ist. Da die Kolbenflächen an den Stirnseiten unterschiedlich groß sind, wird der Stufenkolben 33 jedoch nach rechts bewegt.

Entsprechend der Flächendifferenz der Kolbenflächen des Stufenkolbens 33 wird der Stufenkolben 33 daher gegen das Rückstellelement 28 gedrückt und gegen dessen Rückstellkraft und die Wirkung eines Magneten 70 und unter Kompression von im Ringraum 32.1 enthaltener Luft bewegt. Die Bewegung des Stufenkolbens 33 bewirkt ein Verschließen des Ventils 35.

Durch das Kräftegleichgewicht beidseits des Stufenkolbens 33 ergibt sich trotz geringen Betätigungsdrucks im Füllvolumen 60 ein hoher Bremssatteldruck im Arbeitsraum 61 zur Anlage der Kolben 38, 39 an die Bremsbeläge 53, 54.

Die Bremsanlage arbeitet in dieser Phase mit einem großen Verstärkungsfaktor.

Die Radbremse 16 mit integriertem Stufenkolben 33 kann daher als Radbremse 16 mit integriertem Bremskraftverstärker bezeichnet werden.

Der Ringraum 32.1 weist keinen Atmosphärenanschluss auf. Eintritt von Schmutz kann so vermieden werden.

Der Darstellung der Fig. 4 kann man auch entnehmen, dass sowohl der Stufenkolben 33 als auch die Bremskolben 38, 39 in gleicher Richtung bewegbar und in axialer Richtung hintereinander angeordnet sind. Sie sind daher bezüglich ihrer Bewegungsrichtung parallel zueinander angeordnet. Insgesamt ergibt sich dadurch ein besonders kompakter Aufbau der Radbremse 16.

### Bezugszeichenliste:

- 10: hydraulische Bremsanlage
- 12: Geberzylinder
- 14: hydraulische Leitung
- 14-1: erster hydraulischer Leitungsabschnitt
- 14-2: zweiter hydraulischer Leitungsabschnitt
- 15: Bohrung
- 16: Radbremse
- 18: Trennventil
- 18a: Rückschlagventil
- 20: Volumenspeicher
- 20a: Federelement des Volumenspeichers
- 22: Drehzahlsensor
- 24: Steuergerät
- 26: elektrischer Antrieb/Linearmotor
- 26a: Läuferstab des Linearmotors
- 26b: Ringmagnet des Linearmotors
- 26c: Spulen des Linearmotors
- 28: Rückstellelement
- 29: Zylinderraum
- 30: Gehäuse
- 31: Gehäuse
- 31.1: Gehäusewand
- 31.3: Gehäuseabschnitt
- 32: dynamische Richtung
- 32.1: Ringraum
- 33: Stufenkolben
- 33.1: Stufenkolbenabschnitt mit größerem Querschnitt
- 33.2: Stufenkolbenabschnitt mit kleinerem Querschnitt
- 33.3: Kolbendichtring
- 33.4: Kolbendichtring
- 34: ferromagnetische Halteplatte
- 35: Ventil
- 35.1: Ventilstößel
- 36: Anschlussstück
- 38: Bremskolben
- 39: Bremskolben
- 39.1: Zylinderraum
- 53: Bremsbelag
- 54: Bremsbelag
- 55: Bremsscheibe
- 60: Füllvolumen
- 61: Arbeitsvolumen
- 70: Magnet

- 100: ABS-Einheit

- a: axiale Richtung

## Patentansprüche

1. Hydraulische Bremsanlage (10) mit Antiblockier-Funktion, umfassend einen den hydraulischen Druck erzeugenden Geberzylinder (12), der über eine hydraulische Leitung (14) mit einer Radbremse (16) hydraulisch kommunizierend verbunden ist, ein steuerbares Trennventil (18), das bei aktivierter Antiblockier-Funktion den Geberzylinder (12) von der Radbremse (16) hydraulisch trennt, sowie einen Drehzahlsensor (22) und ein Steuergerät (24), **dadurch gekennzeichnet, dass** die hydraulische Bremsanlage (10) einen gegen eine Federkraft eines Federelements (20a) zu öffnenden Volumenspeicher (20) umfasst, der bei aktivierter Antiblockier-Funktion das Volumen in der hydraulischen Leitung (14) vergrößert, wobei das Federelement (20a) mit einem über das Steuergerät (24) ansteuerbaren elektrischen Antrieb (26) in Wirkverbindung steht, der eine Rückstellung des Federelements (20a) und damit das Öffnen des Volumenspeichers (20) bewirkt.

2. Hydraulische Bremsanlage (10) mit Antiblockier-Funktion nach Anspruch 1, **dadurch gekennzeichnet, dass** der elektrische Antrieb als ein Linearmotor (26) ausgebildet ist.

3. Hydraulische Bremsanlage (10) mit Antiblockier-Funktion nach Anspruch 2, **dadurch gekennzeichnet, dass** der Linearmotor (26) einen als Hohlkörper ausgebildeten Läuferstab (26a) aufweist, in den ein erster hydraulischer Leitungsabschnitt (14-1) und ein hiervon getrennter zweiter hydraulischer Leitungsabschnitt (14-2) hineinreichend angeordnet sind, wobei in axialer Richtung (a) betrachtet der erste hydraulische Leitungsabschnitt (14-1) fest im Läuferstab (26a) und der zweite hydraulische Leitungsabschnitt (14-2) beweglich im Läuferstab (26a) gelagert ist, sodass eine Verfahrbewegung des Läuferstabs (26a) in axialer Richtung (a) gegen das Federelement (20a) eine Bewegung des ersten hydraulischen Leitungsabschnitts (14-1) relativ zum zweiten hydraulischen Leitungsabschnitt (14-2) bewirkt, die das Volumen in der hydraulischen Leitung (14) vergrößert.

4. Hydraulische Bremsanlage (10) mit Antiblockier-Funktion nach Anspruch 3, **dadurch gekennzeichnet, dass** der Linearmotor (26), das Trennventil (18) und das Federelement (20a) in einem Gehäuse (30) vormontiert sind, aus dem die beiden hydraulischen Leitungsabschnitte (14-1; 14-2) hinausreichen, wobei der erste hydraulische Leitungsabschnitt (14-1) in axialer Richtung (a) bewegbar im Gehäuse (30) gelagert ist und der zweite hydraulische Leitungsabschnitt (14-2) fest mit dem Gehäuse (30) verbunden ist.

5. Hydraulische Bremsanlage (10) mit Antiblockier-Funktion nach Anspruch 4, **dadurch gekennzeichnet, dass** im Gehäuse (30) eine ferromagnetische Halteplatte (34) derart angeordnet ist, dass diese in magnetischer Wechselwirkung mit zumindest einem Ringmagneten (26b) des Linearmotors (26) steht, aus der eine in Richtung der Federkraft gerichtete Magnetkraft resultiert.

6. Hydraulische Bremsanlage (10) mit Antiblockier-Funktion nach einem der Ansprüche 1 bis 4, **dadurch gekennzeichnet, dass** das Federelement (20a) derart dimensioniert ist, dass die Federkraft des Federelements größer als eine durch den Geberzylinder (12) erzeugbare hydraulische Kraft ist.

7. Hydraulische Bremsanlage (10) mit Antiblockier-Funktion nach einem der Ansprüche 1 bis 6, **dadurch gekennzeichnet, dass** das Trennventil (18) über den elektrischen Antrieb (26) mechanisch angesteuert ist.

8. Hydraulische Bremsanlage (10) mit Antiblockier-Funktion nach einem der Ansprüche 1 bis 6, **dadurch gekennzeichnet, dass** das Trennventil (18) über das Steuergerät (24) elektrisch angesteuert ist.

9. Hydraulische Bremsanlage (10) mit Antiblockier-Funktion nach einem der vorhergehenden Ansprüche, **dadurch gekennzeichnet, dass** die Radbremse (16) ein Gehäuse (31) aufweist, in dem ein erster Zylinderraum (29) ausgebildet ist, in dem ein Stufenkolben (33) angeordnet ist, ein weiterer Zylinderraum vorgesehen ist, in dem ein Bremskolben (38) angeordnet ist und die Zylinderräume (29) in axialer Richtung des ersten Zylinderraums (29) gesehen hintereinander angeordnet sind.

10. Hydraulische Bremsanlage (10) mit Antiblockier-Funktion nach Anspruch 9, **dadurch gekennzeichnet, dass** der Stufenkolben (33) aus ferromagnetischem Material ausgebildet ist und im Gehäuse (31) ein Magnet angeordnet ist, der mit dem Stufenkolben (33) zusammenwirkt.

11. Hydraulische Bremsanlage (10) mit Antiblockier-Funktion nach einem der Ansprüche 9 oder 10, **dadurch gekennzeichnet, dass** der Stufenkolben (33) zwei Abschnitte (33.1, 33.2) unterschiedlicher Querschnittsfläche aufweist, wobei zwischen einer Gehäusewand (31.1) und einem Stufenkolbenabschnitt (33.1) größerer Querschnittsfläche ein Füllvolumen (60), zwischen dem Bremskolben (38) und einem Stufenkolbenabschnitt (33.2) kleinerer Querschnittsfläche ein Arbeitsvolumen (61) und zwischen einem Gehäuseabschnitt (31.3) und dem Stufenkolbenabschnitt (33.1) größerer Querschnittsfläche ein Ringraum (32.1) ausgebildet ist, in dem ein Rückstellelement (28) angeordnet ist.

12. Hydraulische Bremsanlage (10) mit Antiblockier-Funktion nach Anspruch 11, **dadurch gekennzeichnet, dass** der Ringraum (32.1) ohne Atmosphärenanschluss ausgebildet ist.

13. Hydraulische Bremsanlage (10) mit Antiblockier-Funktion nach einem der vorhergehenden Ansprüche 9 bis 12, **dadurch gekennzeichnet, dass** im Stufenkolben (33) ein Ventil (35) angeordnet ist.

14. Hydraulische Bremsanlage (10) mit Antiblockier-Funktion nach Anspruch 13, **dadurch gekennzeichnet, dass** das Ventil (35) einen Stößel (35.1) aufweist, der sich an dem Ankoppelelement abstützt.

15. Hydraulische Bremsanlage (10) mit Antiblockier-Funktion nach einem der vorhergehenden Ansprüche, **dadurch gekennzeichnet, dass** zur Ankopplung einer Hydraulikleitung (14) an der Radbremse (16) ein Ankoppelelement vorgesehen ist, das an dem Gehäuse (31) drehbar angeordnet ist.

## Claims

1. Hydraulic brake system (10) with anti-lock function, comprising a master cylinder (12) which generates the hydraulic pressure and which is connected in a hydraulically communicating manner to a wheel brake (16) via a hydraulic line (14), a controllable isolation valve (18) which isolates the master cylinder (12) hydraulically from the wheel brake (16) with the anti-lock function activated, a rotational speed sensor (22) and a control device (24), **characterised in that** the hydraulic brake system (10) includes a volume accumulator (20) which can be opened against a spring force of a spring element (20a) and which increases the volume in the hydraulic line (14) with the anti-lock function activated, wherein the spring element (20a) is operatively connected to an electric drive (26) which can be activated by means of the control device (24) and which causes the spring element (20a) to be reset and therefore the volume accumulator (20) to be opened.

2. Hydraulic brake system (10) with anti-lock function according to Claim 1, **characterised in that** the electric drive is in the form of a linear motor (26).

3. Hydraulic brake system (10) with anti-lock function according to Claim 2, **characterised in that** the linear motor (26) has an armature rod (26a) configured as a hollow body, a first hydraulic line section (14-1) and a second hydraulic line section (14-2) separate therefrom being arranged to extend into the armature rod (26a), wherein, viewed in the axial direction (a), the first hydraulic line section (14-1) is mounted rigidly in the armature rod (26a) and the second hydraulic line section (14-2) is mounted movably in the armature rod (26a), so that a displacement of the armature rod (26a) in the axial direction (a) against the spring element (20a) causes a movement of the first hydraulic line section (14-1) relative to the second hydraulic line section (14-2) which increases the volume in the hydraulic line (14).

4. Hydraulic brake system (10) with anti-lock function according to Claim 3, **characterised in that** the linear motor (26), the isolation valve (18) and the spring element (20a) are preassembled in a housing (30) from which the two hydraulic line sections (14-1; 14-2) extend, the first hydraulic line section (14-1) being mounted movably in the axial direction (a) in the housing (30) and the second hydraulic line section (14-2) being connected rigidly to the housing (30).

5. Hydraulic brake system (10) with anti-lock function according to Claim 4, **characterised in that** a ferromagnetic retaining plate (34) is arranged in the housing (30) in such a way that it is in magnetic interaction with at least one ring magnet (26b) of the linear motor (26), which interaction results in a magnetic force directed in the direction of the spring force.

6. Hydraulic brake system (10) with anti-lock function according to any one of Claims 1 to 4, **characterised in that** the spring element (20a) is dimensioned such that the spring force of the spring element is greater than a hydraulic force which can be generated by the master cylinder (12).

7. Hydraulic brake system (10) with anti-lock function according to any one of Claims 1 to 6, **characterised in that** the isolation valve (18) is activated mechanically by means of the electric drive (26).

8. Hydraulic brake system (10) with anti-lock function according to any one of Claims 1 to 6, **characterised in that** the isolation valve (18) is activated electrically by means of the control device (24).

9. Hydraulic brake system (10) with anti-lock function according to any one of the preceding claims, **characterised in that** the wheel brake (16) has a housing (31) in which a first cylinder chamber (29) is formed, in which cylinder chamber (29) a stepped piston (33) is arranged, a further cylinder chamber is provided in which a brake piston (38) is arranged, and the cylinder chambers (29) are arranged one behind the other, viewed in the axial direction of the first cylinder chamber (29).

10. Hydraulic brake system (10) with anti-lock function according to Claim 9, **characterised in that** the stepped piston (33) is formed from ferromagnetic material and a magnet which cooperates with the stepped piston (33) is arranged in the housing (31).

11. Hydraulic brake system (10) with anti-lock function according to either of Claims 9 and 10, **characterised in that** the stepped piston (33) has two sections (33.1, 33.2) having different cross-sectional areas, a filling volume (60) being arranged between a housing wall (31.1) and a stepped piston section (33.1) of larger cross-sectional area, a working volume (61) being arranged between the brake piston (38) and a stepped piston section (33.2) of smaller cross-sectional area, and an annular chamber (32.1), in which a resetting element (28) is arranged, being formed between a housing section (31.3) and the stepped piston section (33.1) of larger cross-sectional area.

12. Hydraulic brake system (10) with anti-lock function according to Claim 11, **characterised in that** the annular chamber (32.1) is configured without a connection to the atmosphere.

13. Hydraulic brake system (10) with anti-lock function according to any one of the preceding Claims 9 to 12, **characterised in that** a valve (35) is arranged in the stepped piston (33).

14. Hydraulic brake system (10) with anti-lock function according to Claim 13, **characterised in that** the valve (35) has a plunger (35.1) which rests against the coupling element.

15. Hydraulic brake system (10) with anti-lock function according to any one of the preceding claims, **characterised in that** a coupling element arranged rotatably on the housing (31) is provided for coupling a hydraulic line (14) to the wheel brake (16).

## Revendications

1. Installation de freinage hydraulique (10) avec fonction antiblocage, comportant
un maître-cylindre (12) qui engendre la pression hydraulique et qui est relié à un frein de roue (16) par communication hydraulique via une conduite hydraulique (14),
une valve de séparation pilotable (18) qui, lorsque la fonction antiblocage est activée, sépare hydrauliquement le maître-cylindre (12) du frein de roue (16), et
un capteur de vitesse de rotation (22) et un appareil de commande (24), **caractérisée en ce que**
l'installation de freinage hydraulique (10) comprend un accumulateur volumique (20) qui s'ouvre à l'encontre de la force élastique d'un élément formant ressort (20a) et qui, lorsque la fonction antiblocage est activée, augmente le volume dans la conduite hydraulique (14),
dans laquelle l'élément formant ressort (20a) est en liaison d'action avec un entraînement électrique (26) pilotable par l'appareil de commande (24), qui provoque un retour de l'élément formant ressort (20a) et donc l'ouverture de l'accumulateur volumique (20).

2. Installation de freinage hydraulique (10) avec fonction antiblocage selon la revendication 1,
**caractérisée en ce que**
l'entraînement électrique est réalisé sous forme de moteur linéaire (26).

3. Installation de freinage hydraulique (10) avec fonction antiblocage selon la revendication 2,
**caractérisée en ce que**
le moteur linéaire (26) comprend une tige mobile (26a) réalisée sous forme de corps creux dans lequel un premier tronçon de conduite hydraulique (14-1) et un second tronçon de conduite hydraulique (14-2) séparé de celui-ci sont agencés en pénétrant dans ladite tige,
dans laquelle, vue en direction axiale (a), le premier tronçon de conduite hydraulique (14-1) est monté de façon fixe dans la tige mobile (26a) et le second tronçon de conduite (14-2) est monté de façon mobile dans la tige mobile (26a), de telle sorte qu'un mouvement de déplacement de la tige mobile (26a) en direction axiale (a) à l'encontre de l'élément formant ressort (20a) provoque un mouvement du premier tronçon de conduite hydraulique (14-1) par rapport au second tronçon de conduite hydraulique (14-2), qui augmente le volume dans la conduite hydraulique (14).

4. Installation de freinage hydraulique (10) avec fonction antiblocage selon la revendication 3,
**caractérisée en ce que**
le moteur linéaire (26), la valve de séparation (18) et l'élément formant ressort (20a) sont pré-montés dans un boîtier (30) hors duquel sortent les deux tronçons de conduite hydrauliques (14-1 ; 14-2), le premier tronçon de conduite hydraulique (14-1) étant monté mobile en direction axiale (a) dans le boîtier (30) et le second tronçon de conduite hydraulique (14-2) est relié solidairement au boîtier (30).

5. Installation de freinage hydraulique (10) avec fonction antiblocage selon la revendication 4,
**caractérisée en ce que**
une plaque de retenue ferromagnétique (34) est agencée dans le boîtier (30) de manière à être en interaction magnétique avec au moins un aimant annulaire (26b) du moteur linéaire (26), dont résulte une force magnétique dirigée en direction de la force élastique.

6. Installation de freinage hydraulique (10) avec fonction antiblocage selon l'une des revendications 1 à 4,
**caractérisée en ce que**
l'élément formant ressort (20a) est dimensionné de telle sorte que la force élastique de l'élément formant ressort est plus grande qu'une force hydraulique susceptible d'être engendrée par le maître-cylindre (12).

7. Installation de freinage hydraulique (10) avec fonction antiblocage selon l'une des revendications 1 à 6,
**caractérisée en ce que**
la valve de séparation (18) est pilotée mécaniquement par l'entraînement électrique (26).

8. Installation de freinage hydraulique (10) avec fonction antiblocage selon l'une des revendications 1 à 6,
**caractérisée en ce que**
la valve de séparation (18) est pilotée électriquement par l'appareil de commande (24).

9. Installation de freinage hydraulique (10) avec fonction antiblocage selon l'une des revendications précédentes,
**caractérisée en ce que**
le frein de roue (16) comprend un boîtier (31) dans lequel est réalisée une première chambre cylindrique (29) dans laquelle est agencé un piston étagé (33), il est prévu une autre chambre cylindrique dans laquelle est agencé un piston de frein (38) et les chambres cylindriques (29) sont agencées l'une derrière l'autre, vues en direction axiale de la première chambre cylindrique (29).

10. Installation de freinage hydraulique (10) avec fonction antiblocage selon la revendication 9,
**caractérisée en ce que**
le piston étagé (33) est réalisé en matériau ferromagnétique et un aimant est agencé dans le boîtier (31), qui coopère avec le piston étagé (33).

11. Installation de freinage hydraulique (10) avec fonction antiblocage selon l'une des revendications 9 ou 10,
**caractérisée en ce que**
le piston étagé (33) comprend deux tronçons (33.1, 33.2) ayant différentes surfaces de section transversale, un volume de remplissage étant réalisé entre une paroi de boîtier (31.1) et un tronçon de piston étage (33.1) de surface de section transversale plus grande, un volume de travail (61) étant réalisé entre le piston de frein (38) et un tronçon de piston étagé (33.2) de surface de section transversale plus petite, et un espace annulaire (32.1) étant réalisé entre un tronçon de boîtier (31.3) et le tronçon de piston étagé (33.1) de surface de section transversale plus grande, espace dans lequel est agencé un élément de rappel (28).

12. Installation de freinage hydraulique (10) avec fonction antiblocage selon la revendication 11,
**caractérisée en ce que**
l'espace annulaire (32.1) est réalisé sans raccord à l'atmosphère.

13. Installation de freinage hydraulique (10) avec fonction antiblocage selon l'une des revendications précédentes 9 à 12,
**caractérisée en ce que**
une valve (35) est agencée dans le piston étagé (33).

14. Installation de freinage hydraulique (10) avec fonction antiblocage selon la revendication 13,
**caractérisée en ce que**
la valve (35) comprend un poussoir (35.1) qui prend appui contre l'élément de couplage.

15. Installation de freinage hydraulique (10) avec fonction antiblocage selon l'une des revendications précédentes,
**caractérisée en ce que**
pour coupler une conduite hydraulique (14) au frein de roue (16), il est prévu un élément de couplage qui est agencé mobile en rotation sur le boîtier (31).
